# DEMANDE DE BREVET EUROPEEN

(11) **EP 4 717 435 A1**
(43) Date de publication de la demande: **01.04.2026**
(21) Numéro de dépôt: 25204653.7
(22) Date de dépôt: 25.09.2025
(51) Int. Cl.: B29C 48/07, B29B 17/00, B32B 5/02, B32B 27/32, B32B 5/18, B32B 5/24, B32B 27/06, B32B 27/08, B32B 27/30, B32B 27/40

(54) **PROCÉDÉ DE FABRICATION D'UNE NAPPE DE MATÉRIAU PLASTIQUE POUR LA RÉALISATION D'UN PANNEAU D ÉQUIPEMENT**

(30) Priorité: 27.09.2024 FR 2410385
(71) Demandeur: Materi'Act, 92000 Nanterre (FR)
(72) Inventeur: QUESNEL, Benjamin, 46015 VALENCIA (ES); DRIEUX, Nadège, 07160 MARIAC (FR)
(74) Mandataire: Lavoix

(57) **Abrégé**

L'invention concerne un procédé de fabrication d'une nappe (32) de matériau plastique, ledit procédé comprenant une étape (34) d'extrusion à chaud de particules thermoplastiques (36, 37, 38),
lesdites particules thermoplastiques comprenant des particules (36) de polyoléfines, lesdites particules de polyoléfines étant choisies parmi : des particules de polyoléfines thermoplastiques (TPO) ; des particules de polyoléfines thermoplastiques vulcanisées (TPV) ; des particules de polyoléfines thermoplastiques élastomériques (TPE) ; et un mélange de toutes ou de certaines de ces particules ;
une quantité de particules (36) de polyoléfines étant comprise entre 50% et 96% en masse par rapport à une masse totale de particules thermoplastiques (36, 37, 38),
les particules (36) de polyoléfines étant au moins partiellement issues de matériaux recyclés.

## Description

La présente invention concerne un procédé de fabrication d'une nappe de matériau plastique, ledit procédé comprenant une étape d'extrusion à chaud de particules thermoplastiques, lesdites particules thermoplastiques comprenant des particules de polyoléfines choisies parmi : des particules de polyoléfines thermoplastiques (TPO) ; des particules de polyoléfines thermoplastiques vulcanisés (TPV) ; des particules de polyoléfines thermoplastiques élastomériques (TPE) ; et un mélange de toutes ou de certaines de ces particules ; une quantité de particules de polyoléfines étant comprise entre 50% et 96% en masse par rapport à une masse totale de particules thermoplastiques, les particules de polyoléfines étant au moins partiellement issues de matériaux recyclés.

L'invention s'applique particulièrement à la réalisation de panneaux d'équipement intérieur pour véhicules, en particulier pour véhicules automobiles.

Afin de réduire l'impact environnemental des véhicules, il est connu d'incorporer des matériaux recyclés à de tels panneaux. Le document KR101946418 (D3) décrit la fabrication d'un panneau composite intégrant des TPO issues de matériaux recyclés.

Cependant, l'utilisation de matériaux recyclés présente des difficultés de mise en œuvre, en raison d'impuretés pouvant demeurer dans lesdits matériaux. En particulier, l'extrusion de TPO issues de matériaux recyclés conduit fréquemment à des nappes présentant des défauts de surface, en particulier des défauts d'élongation.

Par ailleurs, les matériaux recyclés peuvent conserver des traces de composés volatiles d'origine organique, qui confèrent une odeur désagréable aux produits obtenus. Il est donc problématique de les intégrer à un intérieur de véhicule.

Le but de l'invention est de proposer un procédé de fabrication d'une nappe de matériau plastique permettant de remédier aux problèmes précités. A cet effet, l'invention a pour objet un procédé de fabrication du type précité, dans lequel : dans le cas où les particules de polyoléfines comprennent des particules de polyoléfines thermoplastiques (TPO), l'indice de fluidité à chaud (IFC) desdites particules de polyoléfines thermoplastiques est compris entre 0,3 g et 10 g / 10 min ; dans le cas où les particules de polyoléfines comprennent des particules de polyoléfines thermoplastiques vulcanisées (TPV), l'indice de fluidité à chaud (IFC) desdites particules de polyoléfines thermoplastiques vulcanisées est compris entre 10 g et 30 g / 10 min ; et dans le cas où les particules de polyoléfines comprennent des particules de polyoléfines thermoplastiques élastomériques (TPE), la dureté desdites particules de polyoléfines thermoplastiques élastomériques est comprise entre 45 et 65 Shore A.

De tels indices de fluidité à chaud ou duretés permettent notamment de diminuer suffisamment les défauts de surface de la nappe obtenue par extrusion.

Suivant d'autres aspects avantageux de l'invention, le procédé de fabrication comporte l'une ou plusieurs des caractéristiques suivantes, prises isolément ou suivant toutes les combinaisons techniquement possibles :
- avant l'étape d'extrusion, le procédé comprend une étape de traitement, dans laquelle les particules de polyoléfines sont soumises à un flux d'air à une température comprise entre 50°C et 150 °C, préférentiellement comprise entre 100°C et 120 °C ;
- les particules de polyoléfines comprennent des particules de polyoléfines thermoplastiques (TPO), éventuellement mélangées à des particules de polyoléfines thermoplastiques vulcanisés (TPV) et/ou à des particules de polyoléfines thermoplastiques élastomériques (TPE) ;- les particules thermoplastiques comprennent en outre des particules de polypropylène, de préférence au moins partiellement issues de matériaux recyclés, une quantité desdites particules de polypropylène étant de préférence comprise entre 5% et 40% en masse par rapport à une masse totale des particules thermoplastiques, lesdites particules de polypropylène présentant de préférence un indice de fluidité à chaud compris entre 0,5 g et 12,0 g / 10 min, et une densité comprise entre 0,80 et 0,95 g/cm³ ;
- les particules thermoplastiques comprennent en outre des particules de polyéthylène basse densité (PEBD), de préférence au moins partiellement issues de matériaux recyclés, une quantité desdites particules de PEBD étant de préférence comprise entre 15% et 30% en masse par rapport à une masse totale des particules thermoplastiques, lesdites particules de PEBD présentant de préférence un indice de fluidité à chaud compris entre 0,3 g et 12,0 g / 10 min, et une densité comprise entre 0,80 et 0,95 g/cm³ ;

L'invention se rapporte en outre à une nappe de matériau plastique issue d'un procédé tel que décrit ci-dessus.

Selon un mode de réalisation, la nappe de matériau plastique présente une épaisseur comprise entre 0,2 mm et 1,5 mm et/ou présente une densité d'au moins 0,8 g/cm³.

L'invention se rapporte en outre à un panneau d'équipement pour véhicule, comprenant un substrat, une première couche de support et une deuxième couche de protection, la première couche de support étant disposée entre le substrat et la deuxième couche de protection, la première couche de support étant formée d'une nappe de matériau plastique tel que décrite ci-dessus.

Suivant d'autres aspects avantageux de l'invention, le procédé de fabrication comporte l'une ou plusieurs des caractéristiques suivantes, prises isolément ou suivant toutes les combinaisons techniquement possibles :
- la deuxième couche de protection présente une épaisseur comprise entre 5 µm et 50 µm ;
- la deuxième couche de protection est formée d'un matériau de type polyuréthane (PU) ou polyuréthane thermoplastique (TPU), d'un acrylique, ou d'un mélange de ces composés ;
- le panneau d'équipement comprend en outre : une troisième couche de mousse polyoléfine, disposée entre la première couche de support et le substrat ; et préférentiellement une quatrième couche disposée entre la troisième couche de mousse polyoléfine et le substrat, ladite quatrième couche étant réalisée en textile tissé ou non-tissé.

L'invention sera mieux comprise à la lecture de la description qui va suivre, donnée uniquement à titre d'exemple non limitatif et faite en se référant aux dessins sur lesquels :
- la figure 1 est une vue schématique partielle d'un panneau d'équipement selon un mode de réalisation de l'invention ; et
- la figure 2 est une vue schématique d'une étape d'un procédé de fabrication du panneau d'équipement de la figure 1.

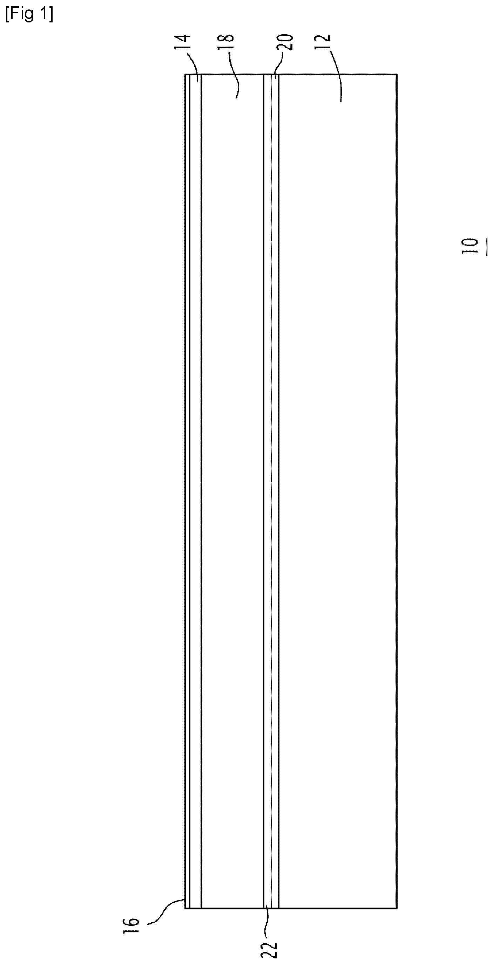

La figure 1 montre un panneau 10 d'équipement selon un mode de réalisation de l'invention. Le panneau 10 est notamment destiné à équiper l'intérieur d'un véhicule, par exemple un véhicule automobile, un train, un bateau, ou tout autre véhicule.

Le véhicule automobile est par exemple une voiture, un véhicule utilitaire, un camion, etc.

Le panneau 10 comprend un substrat 12, une première couche 14 de support et une deuxième couche 16 de protection. La première couche 14 de support est disposée entre le substrat 12 et la deuxième couche 16 de protection.

De manière optionnelle, le panneau 10 comprend en outre une troisième couche 18 de mousse polyoléfine et/ou une quatrième couche 20 de textile et/ou une cinquième couche 22 d'accroche. Dans le mode de réalisation représenté, le panneau 10 comprend une troisième 18, une quatrième 20 et une cinquième 22 couches. En variante non représentée, le panneau comprend seulement l'une ou certaines desdites couches.

Le substrat 12 est un substrat rigide, par exemple formé d'un matériau de type acrylonitrile-butadiène-styrène (ABS). Alternativement, le substrat 12 est formé d'un matériau composite renforcé de fibres naturelles, de type polypropylène à fibres naturelles NFPP (Natural Fibre-reinforced Polypropylene en anglais).

La première couche 14 de support comporte des polyoléfines. Lesdites polyoléfines sont choisies parmi : des polyoléfines thermoplastiques (TPO) ; des polyoléfines thermoplastiques vulcanisées (TPV) ; des polyoléfines thermoplastiques élastomériques (TPE) ; et un mélange de toutes ou de certaines de ces polyoléfines.

Lesdites TPO et/ou lesdites TPV et/ou lesdites TPE sont au moins partiellement issues de matériaux recyclés.

Un pourcentage de polyoléfines dans la première couche 14 de support est compris entre 50% et 96% en masse par rapport à une masse totale de ladite première couche 14.

Dans le cas où les polyoléfines de la première couche 14 de support comprennent des polyoléfines thermoplastiques vulcanisées (TPV), lesdites TPV sont par exemple de type caoutchouc EPDM.

Dans le cas où les polyoléfines de la première couche 14 de support comprennent des polyoléfines thermoplastiques élastomériques (TPE), lesdites TPE sont préférentiellement utilisées sous forme de mélange avec des TPO et/ou avec des TPV.

Selon un mode de réalisation de l'invention, les polyoléfines de la première couche 14 de support comprennent des TPO, éventuellement mélangées à des TPV et/ou à des TPE.

Selon un mode de réalisation, la première couche 14 de support comporte en outre au moins un polypropylène (PP). Préférentiellement, l'au moins un polypropylène est au moins partiellement issu de matériaux recyclés. Un pourcentage de PP dans la première couche 14 de support est préférentiellement compris entre 5% et 40% en masse, plus préférentiellement compris entre 10% et 30% en masse, par rapport à une masse totale de ladite première couche 14 de support.

Selon un mode de réalisation, la première couche 14 de support comporte en outre au moins un polyéthylène basse densité (PEBD). Préférentiellement, l'au moins un PEBD est au moins partiellement issu de matériaux recyclés. Un pourcentage de PEBD dans la première couche 14 de support est préférentiellement compris entre 15% et 30% en masse, plus préférentiellement environ égal à 20% en masse, par rapport à une masse totale de ladite première couche 14 de support.

Selon un mode de réalisation, la première couche 14 de support comporte en outre des additifs tels que des pigments ou colorants, des stabilisants aux UV, des composants absorbeurs d'odeurs ou des agents ignifugeants, dans une quantité inférieure à 10% en masse, et de préférence entre 4 et 6 % en masse.

Selon un mode de réalisation, la première couche 14 de support comporte en outre des matériaux d'origine naturelle, tels que des fibres courtes ou des charges.

De préférence, la première couche 14 de support présente une épaisseur comprise entre 0,2 mm et 1,5 mm. De préférence, la première couche 14 de support présente une densité d'au moins 0,8 g/cm³.

Selon un mode de réalisation non représenté, le panneau 10 comprend plusieurs premières couches 14 de support telles que décrites ci-dessus, superposées les unes aux autres.

La deuxième couche 16 de protection est destinée à former une couche de surface du panneau 10. Dans le mode de réalisation représenté, une face de la première couche 14 de support est au contact d'une face de la deuxième couche 16 de protection.

De préférence, la deuxième couche 16 de protection présente une épaisseur comprise entre 5 µm et 50 µm.

De préférence, la deuxième couche 16 de protection est formée d'un matériau de type polyuréthane (PU) ou polyuréthane thermoplastique (TPU), d'un acrylique, ou d'un mélange de ces composés. De préférence, ledit matériau a une viscosité comprise entre 200 et 700 mPa.s (Brookfield, 25°C).

Dans le mode de réalisation représenté, la troisième couche 18 de mousse polyoléfine est disposée entre la première couche 14 de support et le substrat 12. Plus précisément, dans le mode de réalisation représenté, une face de la première couche 14 de support est au contact d'une face de la troisième couche 18 de mousse polyoléfine.

De préférence, la troisième couche 18 de mousse polyoléfine est formée d'un matériau de type polypropylène. Plus préférentiellement, ledit matériau est au moins partiellement issu de matériaux recyclés.

De préférence, la troisième couche 18 de mousse polyoléfine présente une épaisseur comprise entre 0,2 mm et 2,5 mm. De préférence, la troisième couche 18 de mousse polyoléfine présente une densité d'au moins 45 kg/m³, de préférence entre 50 et 70 kg/m³. De préférence, la troisième couche 18 de mousse polyoléfine présente un taux de compression à 25% compris entre 80 et 160 kPa, selon la norme ISO 3386-1.

De préférence, la quatrième couche 20 de textile est formé d'un textile non-tissé ou en mailles de type Jersey. De préférence, la quatrième couche 20 de textile présente une épaisseur comprise entre 0,2 mm et 3 mm.

Dans le mode de réalisation représenté, la quatrième couche 20 de textile est disposée entre la troisième couche 18 de mousse polyoléfine et le substrat 12. Plus précisément, dans le mode de réalisation représenté, la quatrième couche 20 de textile est au contact du substrat 12.

La cinquième couche 22 d'accroche est formée d'un matériau de type polyuréthane (PU) ou polyuréthane thermoplastique (TPU), d'un acrylique, ou d'un mélange de ces composés. De préférence, ledit matériau a une viscosité comprise entre 200 et 700 mPa.s (Brookfield, 25°C). De préférence, la cinquième couche 22 d'accroche présente une épaisseur comprise entre 3 µm et 10 µm, préférentiellement environ égale à 5 µm.

Dans le mode de réalisation représenté, la cinquième couche 22 d'accroche est disposée entre la troisième couche 18 de mousse polyoléfine et le substrat 12. Plus précisément, dans le mode de réalisation représenté, la cinquième couche 22 d'accroche est en contact avec la troisième couche 18 de mousse polyoléfine et avec la quatrième couche 20 de textile.

En variante non représentée, le panneau 10 comprend uniquement l'une ou l'autre de la quatrième couche 20 de textile et de la cinquième couche 22 d'accroche, au contact à la fois de la troisième couche 18 de mousse polyoléfine et du substrat 12.

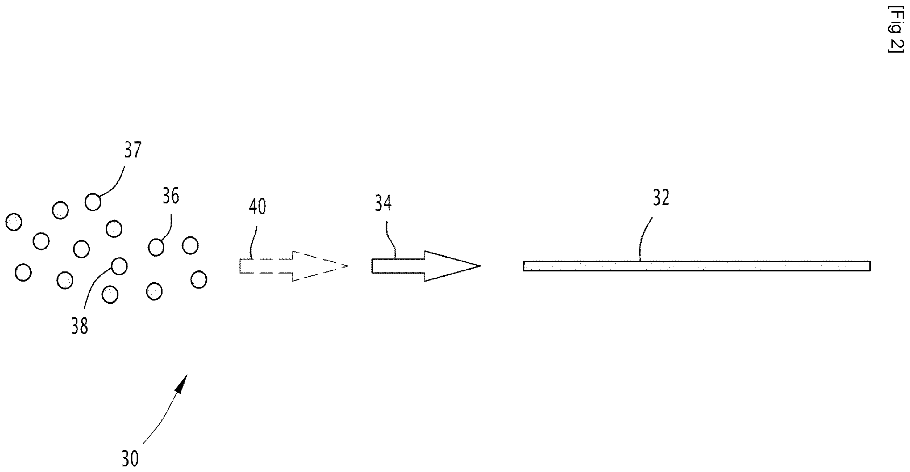

La figure 2 représente schématiquement un procédé 30 de fabrication d'une nappe 32 de matériau plastique, ladite nappe 32 permettant la formation de la première couche 14 de support.

Le procédé 30 comprend une étape 34 d'extrusion à chaud de particules 36, 37, 38 thermoplastiques.

Les particules 36, 37, 38 thermoplastiques comprennent des particules 36 de polyoléfines. Les particules 36 de polyoléfines sont choisies parmi : des particules de polyoléfines thermoplastiques (TPO) ; des particules de polyoléfines thermoplastiques vulcanisés (TPV) ; des particules de polyoléfines thermoplastiques élastomériques (TPE) ; et un mélange de toutes ou de certaines de ces particules.

Une quantité de particules 36 de polyoléfines est comprise entre 50% et 96% en masse par rapport à une masse totale de particules 36, 37, 38 thermoplastiques.

Les particules 36, 37, 38 thermoplastiques comprennent en outre des particules 37, 38 formées d'autres composés entrant dans la composition de la première couche 14 décrite ci-dessus, tels que des polypropylènes et/ou des polyéthylènes basse densité.

Les particules 36, 37, 38 thermoplastiques sont au moins partiellement issues de matériaux recyclés. En particulier, les particules 36 de polyoléfines sont au moins partiellement issues de matériaux recyclés.

Dans le cas où les particules 36 de polyoléfines comprennent des particules de TPO, l'indice de fluidité à chaud (IFC) desdites particules de TPO est compris entre 0,3 g et 10 g / 10 min, plus préférentiellement entre 0,5 et 2 g / 10 min.

Dans le cas où les particules 36 de polyoléfines comprennent des particules de TPV, l'indice de fluidité à chaud (IFC) desdites particules de TPV est compris entre 10 g et 30 g / 10 min.

Dans le cas où les particules 36 de polyoléfines comprennent des particules de TPE, la dureté desdites particules de TPE est compris entre 45 et 65 Shore A, préférentiellement compris entre 50 et 60 Shore A, plus préférentiellement environ égale à 55 Shore A.

Dans le cas où les particules 36, 37, 38 thermoplastiques comprennent des particules 37 de polypropylène (PP), une quantité desdites particules de polypropylène est de préférence comprise entre 5% et 50% en masse par rapport à une masse totale des particules thermoplastiques, et lesdites particules de polypropylène présentent de préférence un indice de fluidité à chaud compris entre 0,5 g et 12,0 g / 10 mn, et une densité comprise entre 0,80 et 0,95 g/cm³.

Dans le cas où les particules 36, 37, 38 thermoplastiques comprennent des particules 38 de polyéthylène basse densité (PEBD), une quantité desdites particules de PEBD est de préférence comprise entre 5% et 25% en masse par rapport à une masse totale des particules thermoplastiques, et lesdites particules de PEBD présentent de préférence un indice de fluidité à chaud compris entre 0,3 g et 12,0 g / 10 mn, et une densité comprise entre 0,80 et 0,95 g/cm³.

Les indices de fluidité à chaud indiqués ci-dessus s'entendent selon des mesures réalisées conformément à la norme ISO 1133, avec un piston de 2,16 kg et à une température de 190°C.

Préférentiellement, l'étape 34 d'extrusion à chaud des particules 36, 37, 38 thermoplastiques est réalisée à une température comprise entre 150°C et 250°C, plus préférentiellement comprise entre 190°C et 220°C.

Les indices de fluidité à chaud précisés ci-dessus des particules 36, 37, 38 permettent d'obtenir une nappe 32 présentant une surface lisse, dépourvue de défauts d'élongation.

Selon un mode de réalisation, préalablement à l'étape 34 d'extrusion, le procédé 30 comprend une étape 40 de traitement des particules 36, 37, 38.

De préférence, durant l'étape 40 de traitement, les particules 36, 37, 38 sont soumises à un flux d'air à une température comprise entre 90°C et 160°C, préférentiellement comprise entre 130°C et 150°C.

De préférence, la durée de l'étape 40 de traitement est comprise entre 30 mn et 180 mn.

Une telle étape 40 de traitement permet d'éliminer des particules 36, 37, 38 certains composés volatiles subsistant dans lesdites particules à l'issue des étapes de recyclage de matériaux. La nappe 32 ensuite obtenue par extrusion est ainsi dépourvue d'odeurs désagréables, permettant son utilisation dans la réalisation d'un équipement intérieur de véhicule.

Un procédé de réalisation du panneau 10 d'équipement à partir de la nappe 32 va maintenant être décrit.

Dans un mode de réalisation, la nappe 32 est laminée sur une couche de mousse polypropylène, précurseur de la troisième couche 18. L'assemblage obtenu, ainsi qu'un film précurseur de la deuxième couche 16 de protection, sont plaqués sous vide sur le substrat 12. Le panneau 10 d'équipement, décrit ci-dessus, est ainsi obtenu.

De manière optionnelle, la couche de mousse polypropylène, précurseur de la troisième couche 18, est assemblée à la quatrième 20 et/ou à la cinquième 22 couches avant ou après l'étape de laminage décrite ci-dessus.

Tout ou partie (14,16,18,20) d'un tel panneau 10 d'équipement peut être recyclé par broyage, sans nécessiter d'étape de séparation des différentes couches.

### EXEMPLES

### EXEMPLE 1 : Formulations

[Tableau 1] Le tableau 1 présente des formulations réalisées par l'extrusion à chaud d'un mélange comprenant des particules 36 de polyoléfines thermoplastiques (TPO), des particules 37 de polypropylène (PP) et des particules 38 de polyéthylène basse densité (PEBD) telles que décrites ci-dessus. Les pourcentages sont exprimés en masse de chacun des composants par rapport à une masse totale de la formulation.

**Tableau 1**

| | Formulation 1 | Formulation 2 | Formulation 3 |
|---|---|---|---|
| 36 (TPO) | 58% | 67% | 86% |
| 37 (PP) | 19% | 29% | 10% |
| 38 (PEBD) | 19% | - | - |
| additifs et/ou charges | 4% | 4% | 4% |

De préférence, les particules 36 de TPO et/ou les particules 37 de PP et/ou les particules 38 de PEBD sont au moins partiellement issues de matériaux recyclés.

Chacune des formulations 1, 2 et 3 permet d'obtenir une nappe 32 telle que décrite ci-dessus, utilisable pour la fabrication d'un panneau 10 tel que décrit ci-dessus.

### EXEMPLE 2 : Traitements des particules

Un lot de particules 37 de PP et un lot de particules 38 de PEBD, au moins partiellement issues de matériaux recyclés, sont fournis pour la réalisation des formulations 1 à 3 décrites à l'exemple 1 ci-dessus.

Avant l'étape d'extrusion à chaud mise en œuvre à l'exemple 1, des premiers échantillons A1.1, A1.2, A1.3 du lot de particules 37 de PP, ainsi que des deuxièmes échantillons A2.1, A2.2, A2.3 du lot de particules 38 de PEBD, sont soumis à l'étape de traitement 40 anti-odeur : les particules sont exposées à un flux d'air à une température de 145°C durant 180 mn.

Par ailleurs, des échantillons témoins B1.1, B1.2, B1.3 du lot de particules 37 de PP, ainsi que des échantillons témoins B2.1, B2.2, B2.3 du lot de particules 38 de PEBD, sont constitués sans mise en œuvre du traitement anti-odeur.

Les échantillons ci-dessus sont ensuite soumis à un test d'odeur selon le protocole VDA 270 (05-2022) - 1,2,3 B.

Plus précisément, les échantillons sont soumis aux conditions suivantes :
- Ai.1 et Bi.1 : 24 heures dans l'eau à 23°C ;
- Ai.2 et Bi.2 : 24 heures dans l'eau à 40°C ;
- Ai.3 et Bi.3 : 2 heures en conditions sèches à 80°C.

Les échantillons sont évalués par différents testeurs, selon l'échelle suivante :
- Niveau 1 : odeur non perceptible ;
- Niveau 2 : odeur légèrement perceptible, non gênante ;
- Niveau 3 : odeur nettement perceptible, non gênante ;
- Niveau 4 : odeur gênante ;
- Niveau 5 : odeur fortement gênante ;
- Niveau 6 : niveau d'odeur inacceptable.

[Tableau 2] Le tableau 2 présente les résultats obtenus :

**Tableau 2**

| Echantillon traité/témoin | Résultat échantillon traité | Résultat témoin |
|---|---|---|
| A1.1/B1.1 (PP) | 2 | 3,5 |
| A1.2/B1.2 (PP) | 2,5 | 4,5 |
| A1.3/B1.3 (PP) | 3,5 | 6 |
| A2.1/B2.1 (PEBD) | 2,5 | 3 |
| A2.2/B2.2 (PEBD) | 3 | 3,5 |
| A2.2/B2.1 (PEBD) | 3 | 4,5 |

Quelles que soient les conditions choisies pour le test d'odeur, les résultats ci-dessus montrent que le traitement anti-odeur est efficace pour amener les particules 37 de PP et les particules 38 de PEBD à un niveau d'odeur acceptable pour une utilisation dans un panneau d'équipement intérieur pour véhicule automobile.

## Revendications

1. Procédé (30) de fabrication d'une nappe (32) de matériau plastique, ledit procédé comprenant une étape (34) d'extrusion à chaud de particules thermoplastiques (36, 37, 38),
lesdites particules thermoplastiques comprenant des particules (36) de polyoléfines, lesdites particules de polyoléfines étant choisies parmi : des particules de polyoléfines thermoplastiques (TPO) ; des particules de polyoléfines thermoplastiques vulcanisées (TPV) ; des particules de polyoléfines thermoplastiques élastomériques (TPE) ; et un mélange de toutes ou de certaines de ces particules ;
une quantité de particules (36) de polyoléfines étant comprise entre 50% et 96% en masse par rapport à une masse totale de particules thermoplastiques (36, 37, 38),
les particules (36) de polyoléfines étant au moins partiellement issues de matériaux recyclés,
le procédé étant **caractérisé en ce que** :
- dans le cas où les particules (36) de polyoléfines comprennent des particules de polyoléfines thermoplastiques (TPO), l'indice de fluidité à chaud (IFC) desdites particules de polyoléfines thermoplastiques est compris entre 0,3 g et 10 g / 10 min ;
- dans le cas où les particules (36) de polyoléfines comprennent des particules de polyoléfines thermoplastiques vulcanisées (TPV), l'indice de fluidité à chaud (IFC) desdites particules de polyoléfines thermoplastiques vulcanisées est compris entre 10 g et 30 g / 10 min ; et
- dans le cas où les particules (36) de polyoléfines comprennent des particules de polyoléfines thermoplastiques élastomériques (TPE), la dureté desdites particules de polyoléfines thermoplastiques élastomériques est comprise entre 45 et 65 Shore A.

2. Procédé selon la revendication 1, dans lequel, avant l'étape (34) d'extrusion, le procédé comprend une étape (40) de traitement, dans laquelle les particules (36) de polyoléfines, et préférentiellement les particules thermoplastiques (36, 37, 38), sont soumises à un flux d'air à une température comprise entre 50°C et 150 °C, préférentiellement comprise entre 100°C et 120 °C.

3. Procédé selon la revendication 1 ou 2, dans lequel les particules (36) de polyoléfines comprennent des particules de polyoléfines thermoplastiques (TPO), éventuellement mélangées à des particules de polyoléfines thermoplastiques vulcanisées (TPV) et/ou à des particules de polyoléfines thermoplastiques élastomériques (TPE).

4. Procédé selon l'une des revendications précédentes, dans lequel les particules thermoplastiques (36, 37, 38) comprennent en outre des particules (37) de polypropylène (PP), de préférence au moins partiellement issues de matériaux recyclés, une quantité desdites particules de polypropylène étant de préférence comprise entre 5% et 40% en masse par rapport à une masse totale des particules thermoplastiques, lesdites particules de polypropylène présentant de préférence un indice de fluidité à chaud compris entre 0,5 g et 12,0 g / 10 min, et une densité comprise entre 0,80 et 0,95 g/cm³.

5. Procédé selon l'une des revendications précédentes, dans lequel les particules thermoplastiques (36, 37, 38) comprennent en outre des particules (38) de polyéthylène basse densité (PEBD), de préférence au moins partiellement issues de matériaux recyclés, une quantité desdites particules de PEBD étant de préférence comprise entre 15% et 30% en masse par rapport à une masse totale des particules thermoplastiques, lesdites particules de PEBD présentant de préférence un indice de fluidité à chaud compris entre 0,3 g et 12,0 g / 10 min, et une densité comprise entre 0,80 et 0,95 g/cm³.

6. Nappe (32) de matériau plastique issue d'un procédé selon l'une des revendications précédentes.

7. Nappe (32) de matériau plastique selon la revendication 6, présentant une épaisseur comprise entre 0,2 mm et 1,5 mm et/ou présentant une densité d'au moins 0,8 g/cm³.

8. Panneau (10) d'équipement pour véhicule, comprenant un substrat (12), une première couche (14) de support et une deuxième couche (16) de protection, la première couche (14) de support étant disposée entre le substrat (12) et la deuxième couche (16) de protection, la première couche (14) de support étant formée d'une nappe (32) de matériau plastique selon l'une des revendications 6 ou 7.

9. Panneau (10) d'équipement selon la revendication 8, dans lequel la deuxième couche (16) de protection présente une épaisseur comprise entre 5 µm et 50 µm.

10. Panneau (10) d'équipement selon la revendication précédente, dans laquelle la deuxième couche (16) de protection est formée d'un matériau de type polyuréthane (PU) ou polyuréthane thermoplastique (TPU), d'un acrylique, ou d'un mélange de ces composés.

11. Panneau (10) d'équipement selon l'une des revendications 8 à 10, comprenant en outre : une troisième couche (18) de mousse polyoléfine, disposée entre la première couche (14) de support et le substrat (12) ; et préférentiellement une quatrième couche (20) disposée entre la troisième couche (18) de mousse polyoléfine et le substrat (12), ladite quatrième couche étant réalisée en textile tissé ou non-tissé.
